# EUROPÄISCHE PATENTSCHRIFT

(11) **EP 0 903 308 B1**
(45) Veröffentlichungstag und Bekanntmachung des Hinweises auf die Patenterteilung: **12.02.2003**
(21) Anmeldenummer: 98117427.9
(22) Anmeldetag: 15.09.1998
(51) Int. Cl.: B65G 47/84

(54) **Zellenrad zur Uebergabe von Gegenständen von einem ersten Fördermittel an ein zweites Fördermittel**
Starwheel for transferring articles from a first to a second conveyor
Roue à étoile pour transférer des objets d'un premier convoyeur à un deuxième

(30) Priorität: 18.09.1997 CH 220097
(43) Veröffentlichungstag der Anmeldung: 24.03.1999
(73) Patentinhaber: IPT Weinfelden AG, 8570 Weinfelden (CH)
(72) Erfinder: Büchi, Robert, 8570 Weinfelden (CH)
(74) Vertreter: Frei, Alexandra Sarah

(56) Entgegenhaltungen:
- EP-A- 0 355 971
- EP-A- 0 412 059
- DE-A- 3 143 511

## Beschreibung

Die Erfindung liegt auf dem Gebiete der Fördertechnik und betrifft ein Zellenrad nach dem Oberbegriff des ersten unabhängigen Patentanspruchs, welches Zellenrad zur Übergabe von seriell geförderten Gegenständen von einem ersten Fördermittel an ein zweites Fördermittel dient. Mit Hilfe eines derartigen Zellenrades werden beispielsweise Gegenstände, die im wesentlichen liegend zugefördert werden, derart übergeben, dass sie im wesentlichen hängend weggefördert werden können.

Zur Übergabe von einer liegenden Förderung beispielsweise auf einem Förderband an eine hängende Förderung mittels beispielsweise einzelnen Greifern müssen Gegenstände nicht nur aufgestellt, das heisst um ca. 90° gedreht werden sondern sie müssen für den Greifvorgang auch genau eingetaktet und genau positioniert werden. Für die Durchführung dieser Funktion bietet sich ein Zellenrad an. Ein solches Zellenrad weist in regelmässigen Abständen angeordnete Zellen auf, die am Radumfang sich in axialer Richtung erstreckende Öffnungen haben. Das Zellenrad wird um seine im wesentlichen horizontale Achse drehend angetrieben. Von den liegend zugeführten Gegenständen wird je einer in jede Zelle des rotierenden Zellenrades eingeführt von derjenigen Stelle des Radumfanges aus, an der sich die Zellen aufwärts bewegen und etwa horizontal ausgerichtet sind (Position 9 Uhr, wenn das Rad im Uhrzeigersinn dreht; Position 3 Uhr, wenn das Rad im Gegenuhrzeigersinn dreht). Ein Gegenstand ist um 90° gedreht, wenn er die oberste Position (Position 12 Uhr) erreicht hat und kann etwa in dieser Position von einem Greiforgan ergriffen und aus der Zelle entfernt werden.

Selbstverständlich ist die Verwendung von Zellenrädern zur Übergabe von seriell geförderten Gegenständen nicht auf die Anwendung der Übergabe von einer liegenden in eine Hangende Förderung beschränkt. Ein Zellenrad kann beispielsweise auch angewendet werden für eine Übergabe von hängend zugeförderten und liegend weggeförderten Gegenständen oder zur Übergabe zwischen zwei liegenden Förderungen, wobei die Gegenstände durch das Zellenrad derart gedreht werden, dass ihre bei der Zuförderung vorlaufende Kante beim Wegfördern nachlaufend ist.

Der Betrieb derartiger Zellenräder ist an sich problemlos. Da aber für die Übergabe der Gegenstände nicht nur eine exakte Positionierung sondern insbesondere für Gegenstände mit einer kleinen Eigensteifigkeit (z.B. Beutel aller Art) auch eine genügende Führung in den Zellen notwendig ist, ist die Form der Zellen auf die zu handhabenden Gegenstände abzustimmen. Das heisst, bei einem Wechsel des Typs der zu übergebenden Gegenstände ist das Zellenrad gegebenenfalls mit anders geformten Zellen auszurüsten oder als Ganzes auszuwechseln und/oder die Position seiner Achse relativ zu mindestens einem der Fördermittel, mit denen das Zellenrad kooperiert, ist entsprechend anzupassen. Derartige Anpassungsarbeiten sind aufwendig, was Zeit und Material betrifft, und können lediglich durch einen sehr eingeschränkten Gebrauch derartiger Zellenräder verhindert werden.

Einfacher einzustellen ist das in der Publikation EP-0355971 beschriebene Rad, an dessen Umfang eine Mehrzahl von Führungsmitteln zur geführten Förderung von Gegenständen angeordnet ist, welche Führungsmittel alle miteinander an Form und Grösse der zu führenden Gegenstände anpassbar sind.

Es ist nun die Aufgabe der Erfindung, ein Zellenrad zu schaffen, mit dem ein Wechsel von zu handhabenden Typen von Gegenständen problemlos bewältigbar ist oder mit dem es in anderen Worten möglich wird, in sehr viel weiteren Grenzen verschiedene Typen von Gegenständen problemlos und ohne Umbauten zu handhaben.

Diese Aufgabe wird gelöst durch das Zellenrad, wie es in den Patentansprüchen definiert ist.

Das erfindungsgemässe Zellenrad weist Zellen auf, die alle miteinander, das heisst mit einem, allen Zellen gemeinsamen Einstellmittel in ihrer Tiefe (Abstand des Zellengrundes vom Umfang des Rades) und/oder in ihrer Form einstellbar sind. Mit einer Einstellung der radialen Zellentiefe wird das Zellenrad für verschiedene Abmessungen von zu übergebenden Gegenständen eingestellt, wodurch sich bei einem derartigen Wechsel eine Verschiebung des ganzen Zellenrades und/oder des ersten und zweiten Fördermittels erübrigt. Mit der Einstellung der Zellenform wird diese auf verschiedene Beschaffenheiten und Formen der zu handhabenden Gegenstände eingestellt.

Die erfindungsgemässe Vorrichtung wird anhand der folgenden Figuren mehr im Detail beschrieben. Dabei zeigen:
- **Figur 1**: eine Übersicht von seriell geförderten Gegenständen von einer liegenden Förderung in eine hängende Förderung mit Hilfe einer beispielhaften Ausführungsform des erfindungsgemässen Zellenrades, das zwischen einem ersten und einem zweiten Fördermittel angeordnet ist (Blickrichtung quer zur Förderrichtung bzw. parallel zur Achse des Zellenrades);
- **Figuren 2 bis 4**: verschiedene Einstellungen der Zellenform und der Zellentiefe an einer Zelle des Zellenrades gemäss Figur 1 (Blickrichtung parallel zur Achse des Zellenrades);
- **Figuren 5 bis 8**: beispielhafte Einstellmittel zur gleichzeitigen Einstellung aller Zellen des Zellenrades gemäss Figur 1 (Blickrichtung parallel zur Achse des Zellenrades);
- **Figur 9**: eine Draufsicht auf die Übergabeanordnung gemäss Figur 1 mit einer beispielhaften Ausführungsform des erfindungsgemässen Zellenrades.

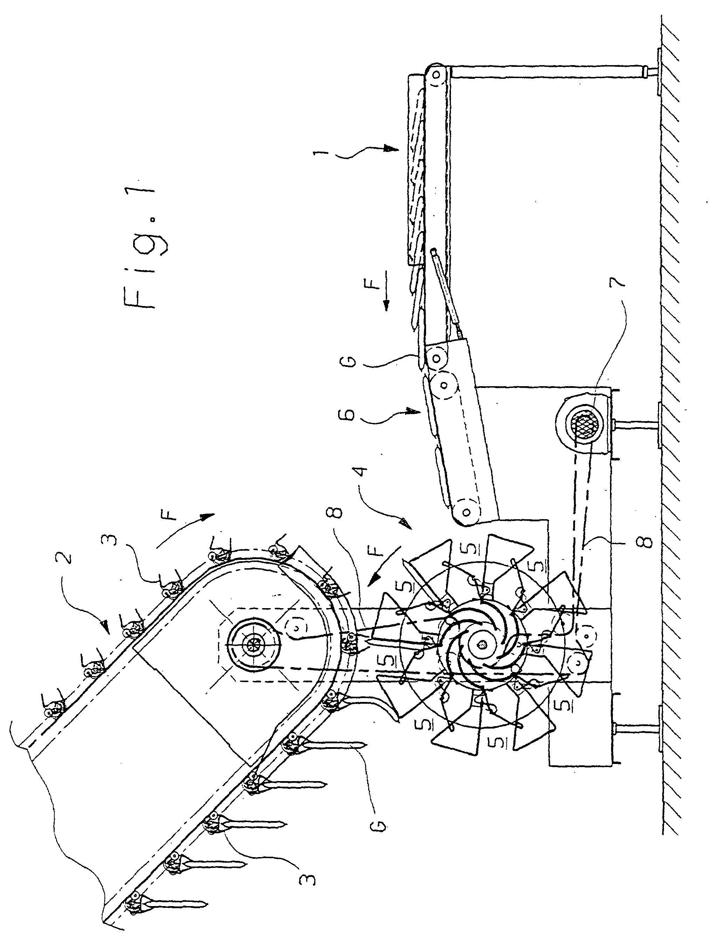

**Figur 1** zeigt als Übersicht eine Übergabe von beutelförmigen Gegenständen G. Diese Gegenstände G werden durch ein erstes Fördermittel 1, beispielsweise durch ein Förderband, im wesentlichen liegend zugefördert, beispielsweise als Strom von einander teilweise überlappenden Gegenständen. Für die Übergabe an ein zweites Fördermittel 2 mit Greiforganen 3, durch welches Fördermittel 2 die Gegenstände G in im wesentlichen hängender Position weggefördert werden, werden die Gegenstände von einem Zellenrad 4 mit beispielsweise acht gegen den Radumfang offenen Zellen 5 übernommen. Das Zellenrad 4 ist zwischen dem ersten und dem zweiten Fördermittel (1 und 2) angeordnet.

Die Förderrichtungen F aller drei Vorrichtungen (erstes Fördermittel 1, zweites Fördermittel 2 und Zellenrad 4) liegen in etwa in einer Ebene (Papierebene der Figur 1). Die Achse des Zellenrades 4 ist quer zu dieser Ebene, im wesentlichen horizontal angeordnet. Das Zellenrad 4 ist mit einem geeigneten Antrieb (siehe weiter unten) im Gegenuhrzeigersinn angetrieben. Das erste Fördermittel 1 mündet etwa in der Position drei Uhr in das Zellenrad und das zweite Fördermittel ist derart angeordnet, dass die Gegenstände etwa in der Position zwölf Uhr von den Greiforganen 3 des zweiten Fördermittels 2 ergriffen und aus den Zellen 5 bewegt werden.

Zur Vereinzelung der Gegenstände, bevor sie in die Zellen 5 des Zellenrades 4 eingeführt werden, und gegebenenfalls, um die Gegenstände mit der Bewegung der Zellen zu synchronisieren, kann zwischen dem ersten Fördermittel 1 und dem Zellenrad 4 ein Zwischenfördermittel 6 vorgesehen sein, das schneller läuft als das erste Fördermittel 1 und gegebenenfalls mit Hilfe von sensorischen Mitteln (nicht dargestellt) auf eine nicht kontinuierliche Bewegung der Zellen 5 des Zellenrades 4 durch Ein- und Ausschalten abstimmbar ist.

Für den Antrieb des Zellenrades 4 ist beispielsweise ein Antrieb 7 vorgesehen, von dem mit Hilfe eines Ketten- oder Zahnriemenantriebes (strichpunktierte Linie 8) nicht nur das Zellenrad 4 sondern auch das zweite Fördermittel 2 mit den Greiforganen 3 genau synchron antreibbar ist.

Die dargestellten Gegenstände G sind Beutel mit vorstehenden Nähten. Derartige Beutel werden vielfach zur Verpackung von Lebensmitteln angewendet, bestehen beispielsweise aus Kunststofffolien oder Metall/Kunststofffolien und haben sehr verschiedene, ihre Handhabung beeinflussende Eigenschaften (z.B. Eigensteifigkeit, Stehvermögen, spezifische Ergreif-Stellen). Die in der Figur 1 dargestellten Beutel stellen lediglich ein Beispiel für mit dem erfindungsgemässen Zellenrad handhabbare Gegenstände dar.

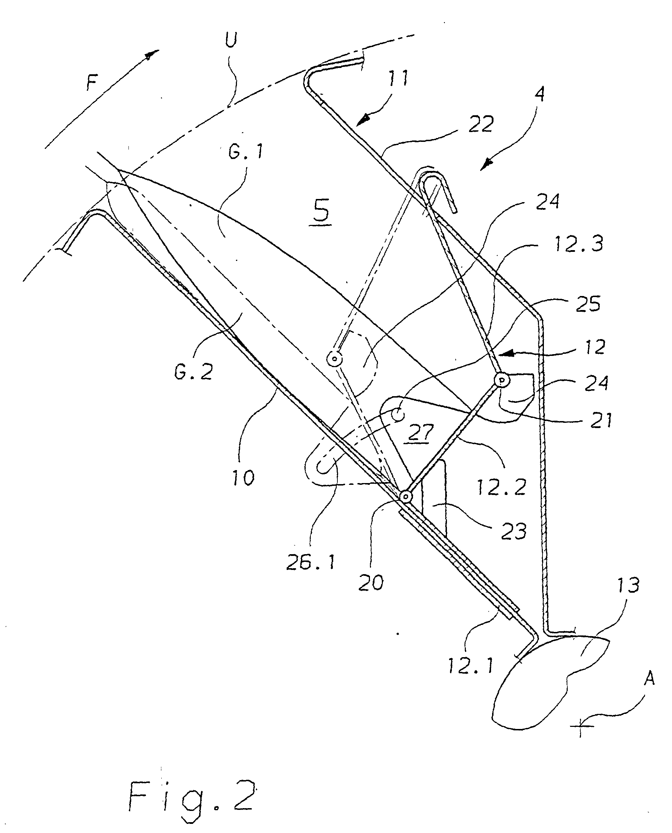

**Figuren 2 bis 4** zeigen im wesentlichen die einstellbaren Teile einer einzelnen Zelle 5 eines Zellenrades 4, wie es in der Figur 1 bereits gezeigt ist. Das Zellenrad hat eine Rotationsachse A, um die es in Förderrichtung F drehend angetrieben wird, und einen Umfang U. Die Zelle 5 ist im Schnitt senkrecht zur Achse A dargestellt.

Die Zelle 5 wird durch drei Wände 10, 11 und 12 gebildet. Die Wand 10 ist in der Zelle nachlaufend und relativ zur Radachse stationär angeordnet. Die Wand 11 ist vorlaufend und ebenfalls stationär angeordnet. Die beiden stationären Wände 10 und 11 sind an einer Welle 13 des Rades befestigt. Zwischen den stationären Wänden 10 und 11 und diese stationären Wände miteinander verbindend ist eine deformierbare und/oder verschiebbare, das heisst einstellbare Wand 12 angeordnet, wobei diese einstellbare Wand 12 durch die stationären Wände geführt ist.

**Figur 2** illustriert eine Einstellung der Zellenform durch Deformation der einstellbaren Wand 12 in der Zelle 5. Die einstellbare Wand 12 der dargestellten, beispielhaften Ausführungsform weist einen ersten, zweiten und dritten Wandteil 12.1, 12.2 und 12.3 auf, welche Wandteile durch zwei Gelenke 20 und 21 gelenkig miteinander verbunden sind. Der erste Wandteil 12.1 ist fest auf der nachlaufenden Wand 10 geführt, der dritte Wandteil 12.3 ist beweglich in einer Öffnung 22 der vorlaufenden Wand 11 geführt. Zur Begrenzung der Schwenkbarkeit der Wandteile 12.1, 12.2 und 12.3 gegeneinander ist die Führungsöffnung 22 entsprechend dimensioniert und sind als Begrenzungsmittel Anschläge 23 und 24 vorgesehen.

Die Deformation wird mit einem weiter unten noch zu beschreibenden Einstellmittel bewirkt, welches an einem Form-Steuerbolzen 25 angreift. Der Form-Steuerbolzen wird bei der Einstellung der Zellenform in einem ersten Steuerschlitz 26.1 verschoben, welcher Steuerschlitz in einer nicht dargestellten, stirnseitigen Platte des Zellenrades angeordnet ist. Der Steuerbolzen 25 ist an einem Steuerteil 27 angeordnet, der fest mit dem zweiten Wandteil 12.2 verbunden ist.

Die einstellbare Wand 12 ist in der Figur 2 in zwei extremen Positionen dargestellt. Ausgezogen dargestellt ist eine Position, in der die einstellbare Wand 12 bzw. deren zweiter Teil 12.2 zusammen mit der nachlaufenden Wand 10 etwa einen rechten Winkel und dadurch einen Zellenboden bildet (rechtwinklige Zellenform). Die einstellbare Wand 12 wird in dieser Position gehalten durch eine Fixierung des Form-Steuerbolzens 25 in der entsprechenden Position, durch den ersten Anschlag 23, auf dem der zweite Wandteil 12.2 aufliegt, und durch die Öffnung 22, die die Position des dritten Wandteils 12.3 bestimmt. Eine derartige Position eignet sich insbesondere für die Handhabung von Gegenständen, die selbst einen Boden aufweisen und dadurch selbst stehen können. Als Beispiel eines derartigen Gegenstandes ist ein in der Zelle 5 stehender Stehbeutel G.1 dargestellt.

Strichpunktiert ist eine Position der einstellbaren Wand 12 dargestellt, in der der zweite Wandteil 12.2 mit der nachlaufenden Wand 10 einen spitzen Winkel bildet (spitzwinklige Zellenform). Die einstellbare Wand 12 ist in dieser Position gehalten durch die Fixierung des Form-Steuerbolzens 25 und durch den zweiten Anschlag 24, auf dem der dritte Wandteil 12.3 aufliegt. Eine derartige Position der einstellbaren Wand 12 ist insbesondere geeignet für die Handhabung von flachen Gegenständen, die kein Stehvermögen haben und/oder die eine seitliche Führung benötigen. Als Beispiel eines derartigen Gegenstandes ist ein Flachbeutel G.2 dargestellt, der an seiner unteren und an seiner oberen Kante eine vorstehende Naht aufweist.

Zwischenformen zwischen der in der Figur 2 dargestellten rechtwinkligen und spitzwinkligen Zellenform sind ebenfalls einstellbar. Wie weiter unten noch zu zeigen sein wird, kann aber in der dargestellten Ausführungsform für derartige Zwischenformen die Zellentiefe nicht verstellt werden.

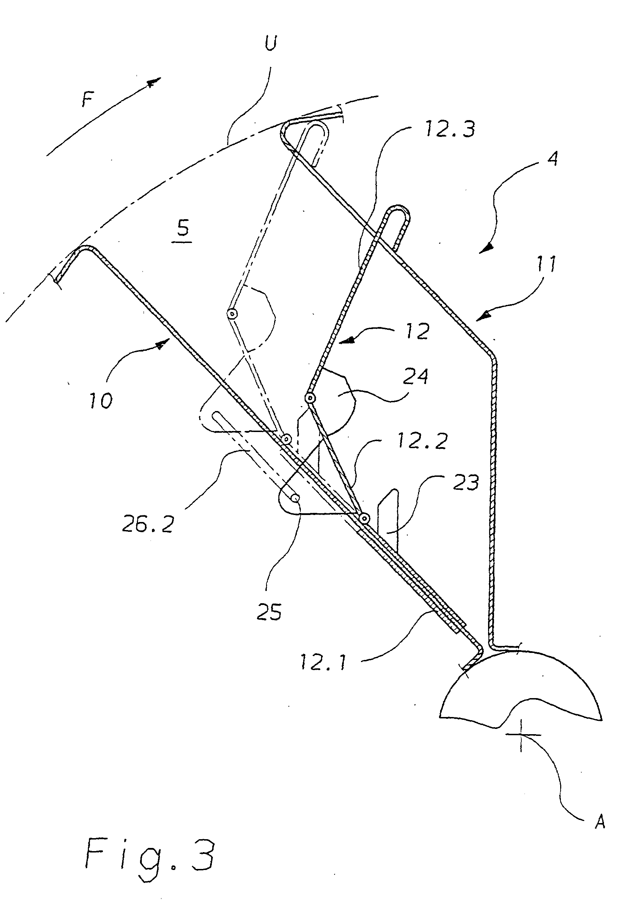

**Figur 3** zeigt dieselbe Zelle 5 wie die Figur 2 und illustriert die Einstellung der Zellentiefe für die spitzwinklige Zellenform. Für eine derartige Einstellung wird der erste Wandteil 12.1 der einstellbaren Wand 12 auf der stationären, nachlaufenden Wand 10 in radialer Richtung verschoben, wobei die Form der einstellbaren Wand 12 beibehalten wird, dadurch dass der Form-Steuerbolzen 25 in einem entsprechenden Steuerschlitz 26.2 verschoben wird und damit die Position des zweiten Wandteiles 12.2 konstant gehalten wird und dadurch dass der dritte Wandteil 12.3 weiter auf dem zweiten Anschlag 24 aufliegt. Für die radiale Verschiebung der einstellbaren Wand 12 sind beispielsweise am ersten Wandteil 12.1 an dessen innerem Ende entsprechende Steuermittel (nicht dargestellt) angeordnet, die mit einem noch zu beschreibenden Einstellmittel wirkverbunden sind.

Die einstellbare Wand 12 ist in der Figur 3 in zwei extremen Positionen dargestellt: ausgezogen in einer Position, in der ihr Abstand von der Achse A des Zellenrades am kleinsten und dadurch die Zellentiefe (Abstand vom Umfang des Zellenrades) am grössten ist, und strichpunktiert in einer Position, in der die Zellentiefe am kleinsten ist.

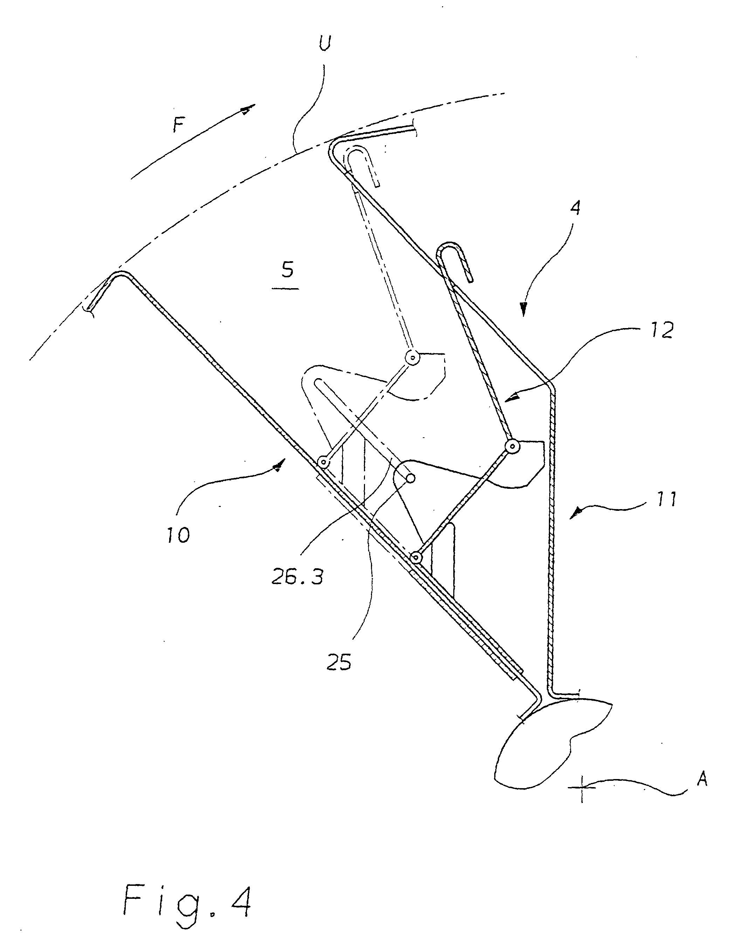

**Figur 4** zeigt nochmals dieselbe Zelle 5 wie die Figuren 2 und 3 und illustriert die Einstellung der Zellentiefe bei rechtwinkliger Zellenform. Diese funktioniert analog zur Einstellung der Zellentiefe für die spitzwinklige Zellenform (Figur 3), wobei der Form-Steuerbolzen 25 in einem entsprechenden Steuerschlitz 26.3 bewegt wird, sodass die Zellenform bei der Tiefen-Einstellung konstant gehalten wird. Es ist wiederum die Position der einstellbaren Wand 12 für die tiefste Zelle ausgezogen und für die am wenigsten tiefe Zelle strichpunktiert dargestellt.

Wenn für die Tiefeneinstellung der Zellen 5 gemäss Figuren 3 und 4 nur für die beiden extremen Zellenformen (rechtwinklige und spitzwinklige Zellenform) Steuerschlitze 26.2 und 26.3 für den Form-Steuerbolzen 25 vorgesehen sind, ist eine Tiefenverstellung für Zwischenformen, wie sie weiter oben angedeutet wurden, nicht möglich.

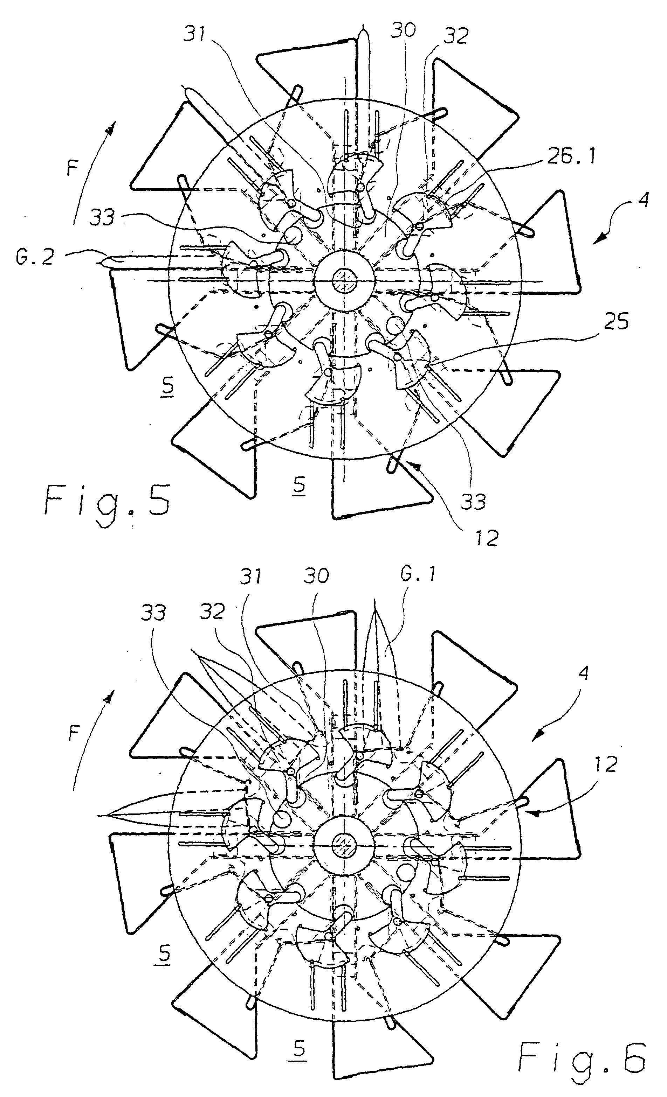

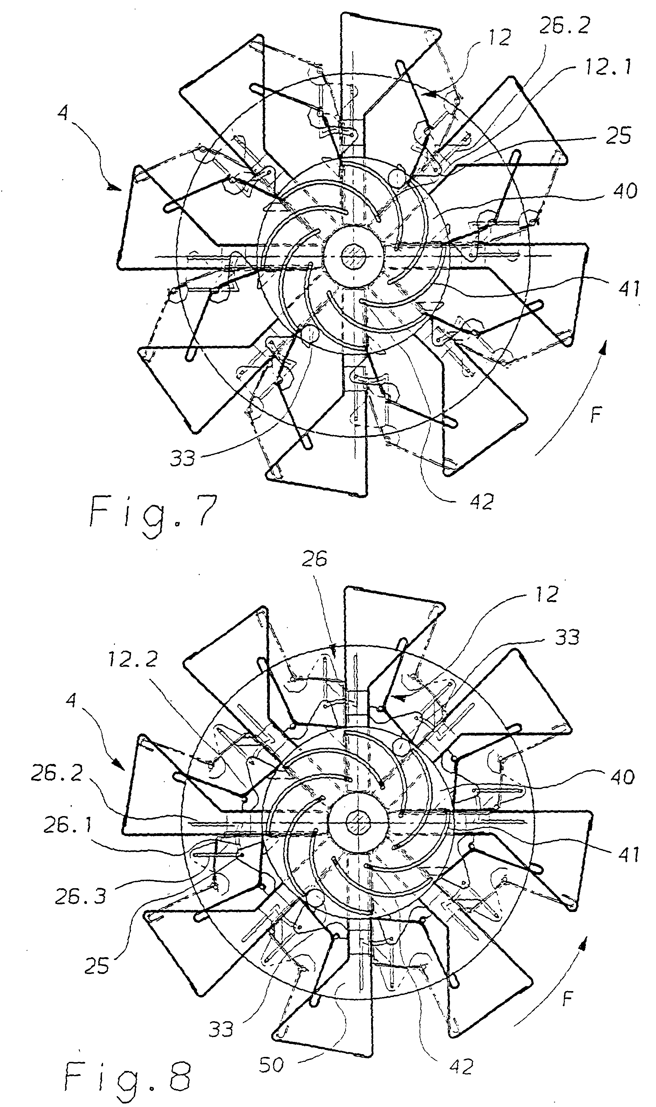

**Figuren 5 bis 8** zeigen beispielhafte Einstellmittel, mit deren Hilfe alle Zellen 5 eines erfindungsgemässen Zellenrades 4 zusammen bezüglich Zellenform und/oder bezüglich Zellentiefe einstellbar sind. Der Blickwinkel ist wiederum parallel zur Achse des Zellenrades 4 gerichtet, wobei die Figuren 5 und 6 die eine Stirnseite des Zellenrades 4 zeigen, die Figuren 7 und 8 die andere Stirnseite.

**Figuren 5 und 6** zeigen das gemeinsame Einstellmittel für die Einstellung der Form aller Zellen 5 des Zellenrades. Dieses Einstellmittel ist auf der einen Stirnseite des Zellenrades 4 angeordnet und besteht im wesentlichen aus einer mit dem Zellenrad koaxial angeordneten Form-Steuerscheibe 30 mit regelmässig über ihren Umfang angeordneten Ausnehmungen 31. In diese Ausnehmungen greifen schwenkbar am Zellenrad angeordnete Steuerhebel 32, mit deren Hilfe die Form-Steuerbolzen 25 der einstellbaren Wände 12 betätigbar, das heisst in den Steuerschlitzen 26.1 verschiebbar sind. Durch Rotation der Form-Steuerscheibe 30 relativ zum Zellenrad 4 im Gegenuhrzeigersinn werden die Steuerhebel 32 im Uhrzeigersinn verschwenkt und wird aus einer spitzwinkligen Zellenform (Figur 5) beispielsweise für Flachbeutel G.2 die rechtwinklige Zellenform (Figur 6) beispielsweise für Stehbeutel G.1 erstellt. Selbstverständlich ist auch die Einstellung von Zwischenformen möglich.

Die Form-Steuerscheibe 30 wird mit Hilfe der Stellschrauben 33 gegenüber dem Zellenrad 4 in der gewünschten Stellung fixiert.

**Figuren 7 und 8** zeigen das gemeinsame Einstellmittel zur gleichzeitigen Einstellung der Tiefe aller Zellen eines erfindungsgemässen Zellenrades gemäss Figur 1. Für diese Einstellung ist auf der der Form-Steuerscheibe 30 (Figuren 5 und 6) gegenüberliegenden Stirnseite des Zellenrades 4 eine ebenfalls koaxial zum Zellenrad angeordnete Tiefen-Steuerscheibe 40 vorgesehen. Diese Tiefen-Steuerscheibe 40 weist spiralig angeordnete Schlitze 41 auf, in denen Tiefen-Steuerbolzen 42, die an den inneren Enden der ersten Wandteile 12.1 der einstellbaren Zellwände 12 angeordnet sind, geführt verschiebbar sind.

Durch Rotation der Tiefen-Steuerscheibe 40 gegenüber dem Zellenrad 4 im Uhrzeigersinn werden die in den Steuerschlitzen 41 geführten Tiefen-Steuerbolzen 42 radial gegen aussen verschoben und wird dadurch die Zellentiefe verkleinert. Die Tiefen-Steuerscheibe 40 wird in der gewünschten Position gegenüber dem Zellenrad 4 fixiert durch Stellschrauben 33.

**Figur 7** zeigt für die spitzwinklige Zellenform die tiefsten Zellen ausgezogen und die Zellen mit der kleinsten Tiefe strichpunktiert, wobei selbstverständlich auch alle Zwischenpositionen einstellbar sind. Bei einer Einstellung der Tiefe für die spitzwinklige Zellenform wird der Form-Steuerbolzen 25 im Steuerschlitz 26.2 geführt (siehe auch Figur 3).

**Figur 8** zeigt für die rechtwinklige Zellenform die tiefsten Zellen ausgezogen und die Zellen mit der kleinsten Tiefe strichpunktiert, wobei selbstverständlich auch alle Zwischenpositionen einstellbar sind. Bei einer Einstellung der Tiefe für die rechtwinklige Zellenform wird der Form-Steuerbolzen 25 im Steuerschlitz 26.3 geführt (siehe auch Figur 4).

Aus der Figur 8 sind die U-förmigen Steuerschlitze 26, die für jede Zelle gebildet sind durch die ineinander übergehenden Steuerschlitze 26.1, 26.2 und 26.3 und die für die Führung der Form-Steuerbolzen 25 dienen, deutlich ersichtlich. Auch eine Platte 50 in der diese Schlitze angeordnet sind, ist dargestellt. Diese Platte 50 ist stirnseitig starr mit dem Zellenrad verbunden.

Es ist ohne weiters vorstellbar, dass zwischen den parallelen Schlitzen 26.2 und 26.3 weitere parallele Schlitze angeordnet werden, die dann eine Tiefeneinstellung für Zellen-Zwischenformen erlauben.

Für eine Neueinstellung des erfindungsgemässen Zellenrades wird zuerst mittels Tiefen-Steuerscheibe 40 die grösste Zellentiefe eingestellt, wodurch die Form-Steuerbolzen 25 im Schlitz 26.1 positioniert werden und dadurch die Zellenform einstellbar wird. Dann wird mittels Form-Steuerscheibe 30 die gewünschte Form eingestellt und darauf folgend mittels Tiefen-Steuerscheibe 40 die gewünschte Zellentiefe.

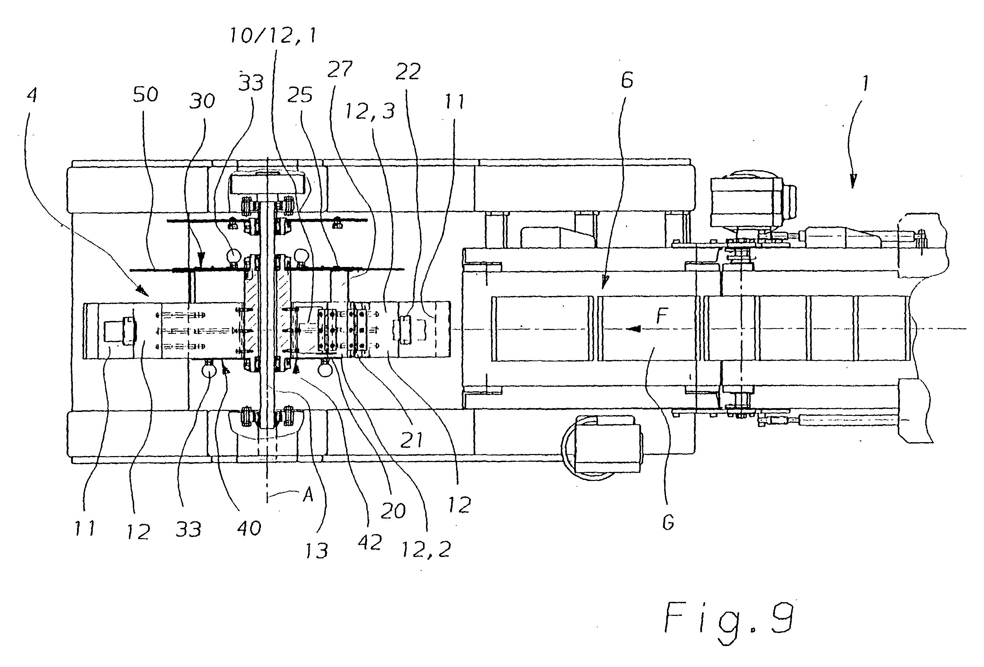

**Figur 9** zeigt noch einen Draufblick auf die Anordnung, die schon in der Figur 1 dargestellt ist. Dabei ist das zweite Fördermittel nicht dargestellt und das Zellenrad 4 ist waagrecht geschnitten, sodass auf der linken Seite der Achse A des Zellenrades 4 die Wände 10, 11 und 12 einer Zelle 5 vom Zelleninneren sichtbar sind, auf der rechten Seite von ausserhalb der Zelle.

Aus dieser Figur ist die Anordnung der beiden Steuerscheiben 30 und 40 auf einander axial gegenüberliegenden Seiten des Zellenrades 4 und der stirnseitige Platte 50 gut ersichtlich. Die Form-Steuerscheibe 30 wirkt dabei mit den Steuerteilen 27 und den Form-Steuerbolzen 25 zusammen und die Tiefen-Steuerscheibe 40 mit den Tiefen-Steuerbolzen 42.

Die axiale Ausdehnung der Zellenwände kann, wie in der Figur 9 dargestellt, kleiner sein als die entsprechende Ausdehnung der zu handhabenden Gegenstände G. Sie kann aber auch gleich gross oder grösser sein. In jedem Falle begrenzen die axialen Positionen der Steuerscheiben 30 und 40 und der stirnseitigen Platte 50 die axiale Breite von zu handhabenden Gegenständen G.

## Patentansprüche

1. Zellenrad (4) zur Übergabe von seriell geförderten Gegenständen (G) von einem ersten Fördermittel (1) an ein zweites Fördermittel (2), welches Zellenrad (4) um seine Achse (A) drehend antreibbar ist und regelmässig angeordnete, gegen seinen Umfang (U) offene Zellen (5) aufweist die zur Handhabung von verschiedenen Typen von Gegenständen (G) bezüglich ihrer Form und/oder ihrer radialen Tiefe miteinander einstellbar sind und die eine nachlaufende, stationäre Wand (10) und eine vorlaufende, stationäre Wand (11) haben, **dadurch gekennzeichnet, dass** die Zellen (5) zusätzlich eine die beiden stationären Wände (10 und 11) verbindende, deformierbare und/oder verschiebbare und dadurch einstellbare Wand (12) aufweisen.

2. Zellenrad nach Anspruch 1, **dadurch gekennzeichnet, dass** die einstellbare Wand (12) dadurch deformierbar ist, dass sie aus einer Mehrzahl von Wandteilen (12.1, 12.2, 12.3) besteht, die gelenkig miteinander verbunden sind.

3. Zellenrad nach Anspruch 1 oder 2, **dadurch gekennzeichnet, dass** alle Zellen (5) des Zellenrades (4) Steuermittel aufweisen, die mit einem gemeinsamen Form-Einstellmittel für eine Einstellung der Zellenform wirkverbunden sind.

4. Zellenrad nach Anspruch 3, **dadurch gekennzeichnet, dass** das gemeinsame Form-Einstellmittel eine koaxial zum Zellenrad (4) angeordnete Form-Steuerscheibe (30) aufweist, die über Steuerhebel (32) mit den Steuermitteln wirkverbunden und relativ zum Zellenrad mindestens beschränkt drehbar ist, wobei die Form-Steuerbolzen an einem der Wandteile (12.2) der einstellbaren Wand (12) angeordnet sind.

5. Zellenrad nach Anspruch 3 oder 4, **dadurch gekennzeichnet, dass** die Steuermittel an der einstellbaren Wand (12) angeordnete Form-Steuerbolzen (25) sind, die in Steuerschlitzen (26.1) in einer mit dem Zellenrad fest verbundenen Platte (50) geführt sind.

6. Zellenrad nach einem der Ansprüche 1 bis 5, **dadurch gekennzeichnet, dass** alle Zellen (5) des Zellenrades (4) Steuermittel aufweisen, die mit einem gemeinsamen Tiefen-Einstellmittel für eine Einstellung der radialen Zellentiefe wirkverbunden sind.

7. Zellenrad nach Anspruch 6, **dadurch gekennzeichnet, dass** das gemeinsame Tiefen-Einstellmittel eine koaxial an der Stirnseite des Zellenrades (4) angeordnete Tiefen-Steuerscheibe (40) aufweist, die mittels spiraligen Steuerschlitzen (41) mit Tiefen-Steuerbolzen (42) wirkverbunden und relativ zum Zellenrad mindestens beschränkt drehbar ist, wobei die Tiefen-Steuerbolzen (42) an der einstellbaren Wand (12) angeordnet sind.

8. Zellenrad nach Anspruch 6 oder 7, **dadurch gekennzeichnet, dass** zur Konstanthaltung der Zellenform während der Tiefenverstellung weitere Steuerschlitzen (26.2, 26.3) in der Platte (50) für die Form-Steuerbolzen (25) vorgesehen sind.

9. Zellenrad nach einem der Ansprüche 3 bis 8, **dadurch gekennzeichnet, dass** die Form-Steuerscheibe (30) auf der einen Stirnseite des Zellenrades (4) und die Tiefen-Steuerscheibe auf der anderen Stirnseite des Zellenrades (4) angeordnet ist.

10. Zellenrad nach einem der Ansprüche 3 bis 9, **dadurch gekennzeichnet, dass** die Form-Steuerscheibe (30) und die Tiefen-Steuerscheibe (40) in gewünschten Positionen durch Stellschrauben fixierbar sind.

11. Anwendung eines Zellenrades nach einem der Ansprüche 1 bis 10 zur Übergabe von Gegenständen (G, G.1, G.2) zwischen einem ersten Fördermittel (1) zur im wesentlichen liegenden Förderung der Gegenstände an ein zweites Fördermittel (2) mit Greiforganen (3) zur im wesentlichen hängenden Förderung der Gegenstände.

12. Anwendung nach Anspruch 11, **dadurch gekennzeichnet, dass** die Gegenstände (G, G.1, G.2) Beutel sind.

## Claims

1. Star feeder (4) for transferring serially conveyed objects (G) from a first conveying means (1) to a second conveying means (2), which star feeder (4) is drivable to rotate around its axis (A) and comprises regularly arranged compartments (5) open towards the circumference (U), which are adjustable simultaneously regarding their form and/or their radial depth for transferring different types of objects and have a stationary upstream wall (10), and a stationary downstream wall (11), **characterized in that** the compartments (5) additionally comprise a deformable and/or displaceable and therefore adjustable wall (12), the adjustable wall connecting the two stationary walls (10 and 11).

2. Star feeder according to claim 1, **characterized in that** the adjustable wall (12) is deformable due to consisting of a plurality of wall parts (12.1, 12.2, 12.3) pivotally joined to each other.

3. Star feeder according to claim 1 or 2, **characterized in that** all compartments (5) of the star feeder (4) comprise control means functionally coupled to a mutual form-adjusting-means.

4. Star feeder according to claim 3, **characterized in that** the mutual form-adjusting-means comprises a form-control-disc (30) arranged co-axially to the star feeder (4) and functionally coupled to the control means via control levers (32) and at least restrictedly rotatable relative to the star feeder, whereby the control means are arranged on one of the wall parts (12.2) of the adjustable wall (12).

5. Star feeder according to claim 3 or 4, **characterized in that** the control means are form-control-pins (25) arranged on the adjustable wall (12), which form-control-pins are guided in control slots (26.1) in a face plate (50) connected rigidly to the star feeder.

6. Star feeder according to one of claims 1 to 5, **characterized in that** for adjusting the radial compartment depth, all compartments (5) of the star feeder (4) comprise control means functionally coupled to a mutual depth-adjusting-means.

7. Star feeder according to claim 6, **characterized in that** the mutual depth-adjusting-means comprises a depth-control-disc (40) on the face of the star feeder (4) which depth-control-disc is functionally coupled to the depth-control-pins (42) by means of spiral control slots (41) and is at least restrictedly rotatable relative to the star feeder, whereby the depth-control-pins (42) are arranged on the adjustable wall (12).

8. Star feeder according to one of claims 6 or 7, **characterized in that** for keeping the compartment form constant during the adjustment of the compartment depth, further control slots (26.2, 26.3) for the form-control-pins (25) are provided in the face plate (50).

9. Star feeder according to one of claims 3 to 8, **characterized in that** the form-control-disc (30) is arranged on one face of the star feeder (4) and the depth-control-disc (40) is arranged on the other face of the star feeder (4).

10. Star feeder according to one of claims 3 to 9, **characterized in that** the form-control-disc (30) and the depth-control-disc (40) are fixable in desired rotation positions relative to the star feeder by means of locking screws.

11. Application of a star feeder according to one of claims 1 to 10 for transferring objects (G, G.1, G.2) from a first conveying means (1) to a second conveying means (2), wherein the objects are conveyed by the first conveying (1) means in a substantially lying position and wherein the second conveying means has grippers (3) for conveying the objects in a substantially hanging position.

12. Application according to claim 11, **characterized in that** the objects (G, G.1, G.2) are bags.

## Revendications

1. Roue alvéolaire (4) destinée au transfert d'objets (G) transportés en série d'un premier moyen de transport (1) à un deuxième moyen de transport (2), laquelle roue alvéolaire (4) peut être entraînée en rotation autour de son axe (A), et comporte des alvéoles (5) disposées régulièrement et ouvertes vers sa circonférence (U) qui, pour la manutention de différents types d'objets (G), sont réglables entre elles en ce qui concerne leur forme et/ou leur profondeur radiale, et qui comportent une paroi stationnaire arrière (10) et une paroi stationnaire avant (11), **caractérisée en ce que** les alvéoles (5) comportent en outre une paroi (12) susceptible de se déformer et/ou de coulisser, et qui est de ce fait réglable, qui relie les deux parois stationnaires (10 et 11).

2. Roue alvéolaire selon la revendication 1, **caractérisée en ce que** la paroi réglable (12) peut être déformée par le fait qu'elle est constituée de plusieurs éléments de paroi (12.1, 12.2, 12.3) qui sont reliés entre eux par articulation.

3. Roue alvéolaire selon la revendication 1 ou 2, **caractérisée en ce que** toutes les alvéoles (5) de la roue alvéolaire (4) comportent des moyens de commande qui sont en liaison active avec un moyen de réglage de forme commun destiné à un réglage de la forme des alvéoles.

4. Roue alvéolaire selon la revendication 3, **caractérisée en ce que** le moyen de réglage de forme commun comporte un disque de commande de forme (30) disposé coaxialement à la roue alvéolaire (4), qui est en liaison active avec les moyens de commande par l'intermédiaire de leviers de commande (32), et qui peut tourner par rapport à la roue alvéolaire, au moins de façon limitée, les chevilles de commande de forme étant disposées sur l'un des éléments de paroi (12.2) de la paroi réglable (12).

5. Roue alvéolaire selon la revendication 3 ou 4, **caractérisée en ce que** les moyens de commande sont des chevilles de commande de forme (25) disposées sur la paroi réglable (12), qui sont guidées dans des rainures de commande (26.1) pratiquées dans une plaque (50) reliée solidairement à la roue alvéolaire.

6. Roue alvéolaire selon l'une quelconque des revendications 1 à 5, **caractérisée en ce que** toutes les alvéoles (5) de la roue alvéolaire (4) comportent des moyens de commande qui sont en liaison active avec un moyen de réglage de profondeur commun destiné à un réglage de la profondeur radiale des alvéoles.

7. Roue alvéolaire selon la revendication 6, **caractérisée en ce que** le moyen de réglage de profondeur commun comporte un disque de commande de profondeur (40) disposé coaxialement sur la face frontale de la roue alvéolaire (4), qui est en liaison active avec des chevilles de commande de profondeur (42) au moyen de rainures de commande (41) en forme de spirale, et qui peut tourner par rapport à la roue alvéolaire, au moins de façon limitée, les chevilles de commande de profondeur (42) étant disposées sur la paroi réglable (12).

8. Roue alvéolaire selon la revendication 6 ou 7, **caractérisée en ce que** d'autres rainures de commande (26.2, 26.3) sont prévues dans la plaque (50) pour les chevilles de commande de forme (25) afin de maintenir constante la forme des alvéoles pendant le réglage de la profondeur.

9. Roue alvéolaire selon l'une quelconque des revendications 3 à 8, **caractérisée en ce que** le disque de commande de forme (30) est disposé sur l'une des faces frontales de la roue alvéolaire (4), et le disque de commande de profondeur sur l'autre face frontale de la roue alvéolaire (4).

10. Roue alvéolaire selon l'une quelconque des revendications 3 à 9, **caractérisée en ce que** le disque de commande de forme (30) et le disque de commande de profondeur (40) peuvent être bloqués dans des positions souhaitées par des vis de réglage.

11. Utilisation d'une roue alvéolaire selon l'une quelconque des revendications 1 à 10 pour le transfert d'objets (G, G.1, G.2) entre un premier moyen de transport (1), destiné au transport en position sensiblement horizontale des objets, et un deuxième moyen de transport (2) comportant des organes de préhension (3), destiné au transport à l'état sensiblement suspendu des objets.

12. Utilisation selon la revendication 11, **caractérisée en ce que** les objets (G, G.1, G.2) sont des sachets.
